# EUROPÄISCHE PATENTSCHRIFT

(11) **EP 1 211 848 B1**
(45) Veröffentlichungstag und Bekanntmachung des Hinweises auf die Patenterteilung: **15.02.2006**
(21) Anmeldenummer: 01123532.2
(22) Anmeldetag: 29.09.2001
(51) Int. Cl.: H04L 29/08

(54) **Verfahren für den Verbindungsaufbau in Telekommunikationsnetzen mit DSL-Technologien**
Method for establishing a connection in telecommunication networks with DSL technology
Procédé d'établissement d'appel aux réseaux de télécommunication avec technologie DSL

(30) Priorität: 28.11.2000 DE 10060452
(43) Veröffentlichungstag der Anmeldung: 05.06.2002
(73) Patentinhaber: Deutsche Telekom AG, 53113 Bonn (DE)
(72) Erfinder: Brandt,Thoralf, 06901 Rackith (DE); Kunze, Rüdiger, 13156 Berlin (DE)

(56) Entgegenhaltungen:
- WO-A-00/16529
- WO-A-00/44149
- US-A- 5 802 304
- US-A- 6 012 086

## Beschreibung

Die Telekommunikationsbranche ist wie kaum ein anderer industrieller Sektor einem schnellen Wandel unterzogen. Durch globale Liberalisierung und neue Technologien erfährt diese Branche hohe Wachstumsraten. Neue Telekommunikationstechnologien verschmelzen die klassische Sprachübertragung mit der Datenübertragung.

Durch das zunehmende Angebot an Dienstleistungen, z. B. Video on Demand (Videos abrufen) oder e-Commerce (Einkaufen und Abwickeln aller Geschäfte von zu Hause), wächst das Interesse an dem Internet. Gleichzeitig wächst aber auch die Unzufriedenheit mit den bestehenden Grenzen des Internets und seinen Anwendungen. Ein äußerst wichtiger Kritikpunkt ist die niedrige Übertragungskapazität und die daraus resultierende Übertragungsgeschwindigkeit. Neue Übertragungstechnologien lassen aber auf eine baldige Entwicklung innovativer Applikationen hoffen. Das Schlagwort heißt hier Multimedia. Die Telekommunikation der Zukunft wird die Multimediakommunikation in breitbandigen Netzen sein.

Schon in wenigen Jahren wird die Datenübertragung mit 64 Kbit/s oder 128 Kbit/s, die das ISDN ermöglicht, vermutlich der Vergangenheit angehören. Die Zusammenführung der Sprach-, Daten- und Videokommunikation (Stichwort "Multimedia-Konvergenz") benötigt eine weitaus höhere Übertragungsrate.

Mit der DSL-Technik (Digital Subscriber Line) ist es möglich, Daten mit hoher Geschwindigkeit über eine Zweidraht-Anschlussleitung bis zum Kunden zu übertragen. Das derzeit von der Deutschen Telekom AG angebotene ADSL-Verfahren (Asymmetrical-DSL) realisiert eine maximale Übertragungsrate von 768 Kbit/s zum Kunden (Downstream) und 128 Kbit/s vom Kunden (Upstream). Diese Technologie wird heute bereits eingesetzt, um private Haushalte mit einem hohen Datenaufkommen breitbandig an das Internet anzubinden. Zur Zeit erfolgt in Deutschland ein flächendeckender Ausbau.

xDSL ist der Oberbegriff für alle DSL-Technologien. Das besondere an xDSL ist, dass der Anschluss dieser Technologie über die herkömmliche Kupferinfrastruktur erfolgt und Datenraten bis zu 300 Mbit/s über wenige 100m zulässt.

Das herkömmliche analoge Telefonsystem POTS (Plain Old Telephone Service) war ursprünglich für die Übertragung der Sprache entwickelt worden. Als Kompromiss zwischen Wirtschaftlichkeit und Sprachverständlichkeit wurde für die Sprachübertragung ein Frequenzbereich von 0,3 bis 3,4 kHz festgelegt, um mittels der Trägerfrequenztechnik zwischen Vermittlungsstellen mehrere Sprachkanäle über ein Kabel übertragen zu können.

Nach wie vor existiert diese Begrenzung der Bandbreite, was ebenfalls die maximal erreichbare Übertragungskapazität beschränkt. Um höhere Datenraten erreichen zu können, musste diese Barriere durchbrochen werden. xDSL-Verfahren umgehen die Probleme der Bandbreitenbegrenzung, indem sie einfach einen höheren Frequenzbereich für die Datenübertragung nutzen. Durch Aufsplitten der auf dem Kupferkabel verfügbaren Bandbreite in unterschiedliche Kanäle für Sprach- und Dateninformationen werden somit brachliegende Bandbreiten genutzt. Dies erfordert aber erhebliche Modifikationen auf Seiten der Vermittlungsstellen und des Teilnehmers.

Die verschiedenen xDSL-Techniken sind danach einzuteilen, wie die Trennung der Übertragungsrichtung erfolgt, von der Vermittlungsstelle zum Teilnehmer (Downstream) und vom Teilnehmer zur Vermittlungsstelle (Upstream). Die einfachste Variante ist die Nutzung je einer Doppelader für jede Übertragungsrichtung. In diesem Fall spricht man von einer Simplexübertragung. Der Großteil der xDSL-Technologien basiert auf der Duplexübertragung, wobei für die Richtungstrennung Frequenzmultiplexverfahren oder Echokompensation verwendet werden. Unterschieden wird des Weiteren zwischen Verfahren mit gleichen und mit unterschiedlichen Bitraten für Downstream und Upstream. Bei gleichen Bitraten in beiden Übertragungsrichtungen spricht man von SDSL (Symmetric-DSL), bei unterschiedlichen Bitraten von ADSL (Asymrnetrical-DSL).

### Stand der Technik

Bekannt ist ein Verfahren zur automatischen Verbindung eines drahtlosen mobilen Kommunikationsgerätes mit einem IP-Netzwerk, bei dem die für das mobile Kommunikationsgerät bestimmten IP-Pakete von einem Home Agent (Gateway oder Router) im IP-Netzwerk über ein lokales Netzwerk (LAN) weitergeleitet werden. Das lokale Netzwerk verfügt über einen Authentifizierungsserver für die Zugriffserlaubnis sowie über Interworking Units für die Verbindung zum drahtlosen Netzwerk und signalisiert dem Home Agent die Bereitschaft zur Übertragung der IP-Pakete zu autorisierten mobilen Nutzern (WO 00/44149).

Ein anderes Verfahren (WO 00/16529) sieht vor, dass zum Clientrechner eines Nutzers während einer interaktiven Netzwerk-Session zusätzliche Inhalte von lokalen oder externen Anbietern übertragen werden. Die zusätzlichen Inhalte werden an die interaktive Kommunikation so angepasst, dass keine erkennbaren Auswirkungen auf die ausgewählte Übertragung entstehen.

Die derzeit im Einsatz befindliche DSL-Technik aller Hersteller ist für den Verbindungsaufbau vom Kunden zum Internet-Provider (Netzanbieter) konzipiert. Das bedeutet, dass nur der Kunde den Verbindungsaufbau initiieren (auslösen) kann. Das folgende Beispiel beschreibt ein derzeit gängiges Verfahren des Verbindungsaufbaus zum Internet-Provider T-Online.

ADSL ist zunächst eine sogenannte "always-on"-Technologie. Das bedeutet, dass das DSL-Modem auf der Kundenseite (ATU-R) ständig mit dem DSL-Modem in der Vermittlungs-stelle (ATU-C) verbunden ist Der PC des Kunden ist von dem Moment an, in dem er eingeschaltet wird, mit dem ATM-Netz (Asynchronous Transfer Mode) verbunden.
Zugriffsverfahren und Eigenschaften der Anschlussmedien werden durch die Spezifikation der Transportschichten des ATM-Referenzmodells bestimmt (Ethernet-Netzwerkstandard).

Für die Verpackung der Ethernet-Rahmen wird ATM Adaption Layer 5 (Schicht 3 und 4 des ATM-Referenzmodells) verwendet [siehe Kyas, Otmar; ATM Netzwerke Aufbau - Funktion - Performance, Datacom Verlag 1995, Seite 72 - 78].

Ein Anwählen der Teilnehmer, wie bei ISDN, ist bei der Anwendung von DSL technisch nicht möglich. Um dennoch bestehende Abrechnungsstrukturen (im Beispiel T-Online "pro Minute") weiter verwenden zu können, wird eine "virtuelle Wählverbindung" geschaffen. Das geschieht unter Zuhilfenahme des Protokolls "PPPoE" (Point-to-Point Protocol over Ethernet), das durch den DSL-Treiber auf dem PC des Kunden implementiert wird. Die Realisierung einer virtuellen Wählverbindung wird nicht nur für Abrechnungszwecke verwendet, sondern übernimmt auch die Authentifizierung und die Autorisierung des Kunden.

Während des Ablaufs des PPP-Protokolls werden die Kundendaten (Name und Passwort) durch den Zugriff auf eine Kundendatenbank RADIUS (Remote Dial-In User Service) überprüft. Sind die Zugangsdaten gültig, wird dem PC auf der Kundenseite dynamisch eine Internet-Protokotl-Adresse (IP-Adresse) zugewiesen. Ab diesem Zeitpunkt kann der Kunde Internetdienste nutzen und ist für die Dauer dieser Verbindung auch aus dem Internet erreichbar, sofern seine IP-Adresse ermittelt werden kann.

Zur Übertragung werden die Internet-Protokoll-Daten der Netzwerk- und Transportschicht (siehe OSI-Referenzmodell) in das PPPoE-Protokoll und diese Daten wiederum in Ethernet-Rahmen und danach in ATM-Zellen verpackt Die Aufgabe der Gegenstelle im Netz ist es, diese Pakete wieder zu öffnen und die Nutzinformationen herauszufiltern.

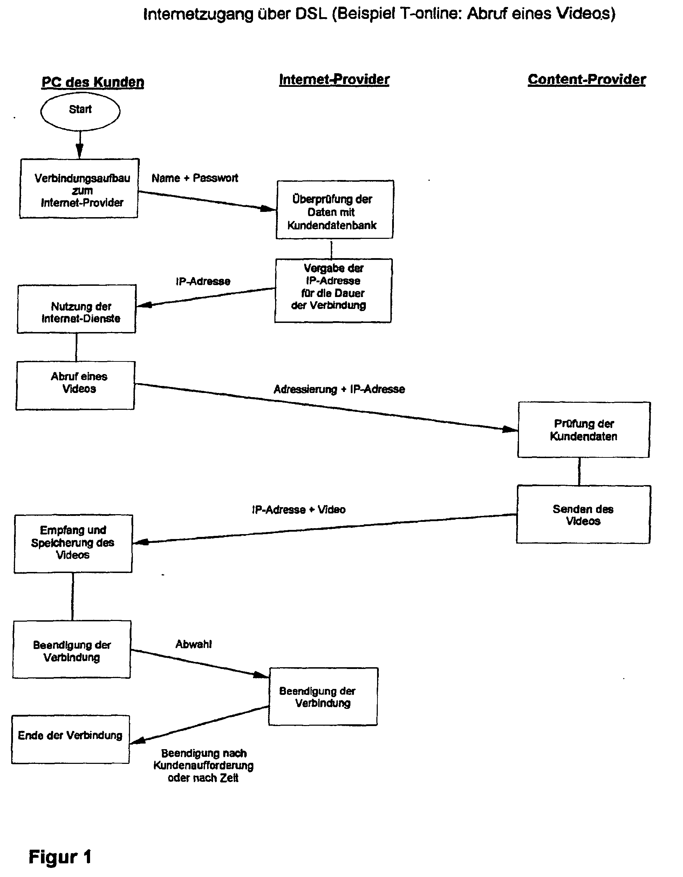

Figur 1 zeigt das Ablaufdiagramm der Anmeldung eines DSL-Kunden (PC des Kunden) bei einem Internet-Provider (z.B. T-Online).

Die Verbindung zum Internet-Provider kann nach heutigem Stand der Technik immer nur vom Kunden bzw. von dessen PC ausgelöst werden. Das bedeutet, dass der Kunden-PC, wenn keine Verbindung zum Internet-Provider existiert, aus dem Internet nicht erreichbar ist. Er besitzt nur für die Zeit einer aktiven Verbindung eine gültige IP-Adresse (Internet-Protokoll-Adresse) und erhält bei jeder neuen Verbindung eine neue IP-Adresse zugewiesen. In dieser Zeit, da der Kunde beim Internet-Provider angemeldet ist, also "online" ist, ist er über die aktuelle IP-Adresse auch aus dem Internet erreichbar. Es ist derzeit aber nur möglich, dass der Kunde selbst die für eine Online-Verbindung aktuelle IP-Adresse an einen anderen Internet-Nutzer weitergibt

Ein Verbindungsaufbau aus dem Internet zum Kunden ("Dial-Out") erfordert also eine Anpassung bzw. Veränderung der DSL-Komponenten sowohl beim Kunden als auch in der Plattform beim Netzbetreiber. Der Client muss dabei nicht zwingend ein PC sein. Es kann sich hierbei auch um Geräte handeln, welche sich direkt hinter dem Netzanschluss des Kunden befinden und PC-ähnliche Funktionalitäten besitzen.

### Aufgabenstellung und technische Lösung

Die Erfindung stellt sich die Aufgabe, ein Verfahren anzubieten, mit dem Internet-Kunden mit DSL-Anschluss aus dem Internet für Content-Provider (Anbieter von Inhalten) erreichbar sind, soweit die Kunden einen solchen Dienst nutzen wollen. Der Verbindungsaufbau sowie das Überspiel von Informationen soll dann auch automatisch möglich sein, d.h. unabhängig von der Anwesenheit und dem Auslösen von Bedienfunktionen des Kunden an seinem PC.

Die Aufgabe wird durch ein Verfahren gemäß Anspruch 1 und durch ein alternatives Verfahren gemäß Anspruch 4 gelost.

Die Aufgabe wird dadurch gelöst, dass ein vom Kunden autorisierter Content-Provider Verbindung zum Internet-Provider des Kunden aufnimmt und - nach Überprüfung der Berechtigung - der Internet-Provider den Kunden bzw. dessen PC über die Ethernet-Adresse zur Verbindungsaufnahme veranlasst, soweit eine online-Verbindung nicht zufällig besteht. Der Content-Provider erhält dann die jeweils aktuelle IP-Adresse des Kunden.

Die Ethernet-Adressen der Kunden (MAC-Adressen - Message Authentification Codes) werden beim Internet-Provider gespeichert. Dafür wird der Server des Internet-Providers mit einer zusätzlichen Datenbank ausgestattet Die MAC-Adresse des Kunden-PC ist ein feststehender weltweit einmaliger Code (Code der Ethernet-Karte für den Internet-Zugang über einen DSL-Anschluss), der mit der Fertigung der Ethernet-Karte geprägt wird und beim Verbindungsaufbau zum Internet-Provider mit übertragen wird.

Die Funktionalität umfasst also, dass ein Content-Provider, der sich im Internet befindet, an den Internet-Provider, dessen Adresse er in seiner Kundendatenbank gespeichert hat, die Anforderung für eine Internetverbindung zu einem bestimmten Kunden sendet und nach Prüfung der Authentifizierung und Autorisierung die IP-Adresse von diesem Kunden erhält, soweit der Kunde "online" ist. Ist der Kunde "offline", wird sein PC vom Internet-Provider zur Verbindungsaufnahme aufgefordert, d.h. die DSL-Software des Kunden-PC wird automatisch gestartet, soweit der PC eingeschaltet ist Der stets eingeschaltete Zustand des PC ist Voraussetzung für die automatische Betriebsweise und damit Bestandteil der Vereinbarung zur Nutzung dieses Dienstes.

Nach dem erfolgreichen Verbindungsaufbau erhält der Kunde vom Internet-Provider die für diese Verbindung gültige IP-Adresse, die der Kunden-PC automatisch an den Content-Provider übermittelt. Der Content-Provider kann das Überspiel jetzt vornehmen.

Wenn der DSL-Kunde ohne Anwesenheit an seinem PC oder einem anderen PC-ähnlichen Gerät erreicht werden kann, können neue Dienste angeboten werden, die durch die geringe Bandbreite bei ISDN nicht möglich sind. Denkbar wäre gezielte Werbung z. B. für Kinofilme, die der Kunde bestellen kann. Diese Informationen könnten in Abwesenheit des Kunden auf dessen PC überspielt werden. Weiterhin können On-Demand-Dienste (z. B. News on Demand, Email, Musik) automatisch in Abwesenheit oder in Zeiten geringer Netzlast ausgeführt werden. Dadurch wäre eine bessere Ausnutzung des Internets zu erreichen, da nicht die "klassische" Surfzeit von 19 Uhr bis 23 Uhr benutzt werden muss. Dieses Leistungsmerkmal macht es auch möglich, einen direkten Kundenkontakt aufzubauen und zu pflegen. Anhand von Kundenprofilen kann dann wesentlich besser auf den Kunden eingewirkt werden.

Real-Push-Dienste beinhalten den Transport von Informationen eines Content-Providers zum Kunden. Der Verbindungsaufbau und der Informationstransport wird dabei durch den Content-Provider initiiert. Der Content-Provider legt damit fest, zu welchem Zeitpunkt Informationen an den Kunden überspielt werden. Ein klassisches Beispiel von Real-Push-Diensten sind On-Demand-Dienste. Der Kunde schließt einen Aho-Vertrag mit dem Content-Provider und dieser sendet dem Kunden z. B. viermal pro Monat die Vorschau der aktuellen Kinofilme. Eine Vielzahl von Diensten ist hier denkbar.

### Technische Lösung am Beispiel T-Online

Ein Rechner mit einer Internet-Adresse (Server eines Content-Providers) erhält die Anweisung, Daten (Nachrichten, Videos,...) an einen Kunden zu übertragen (Real Push). Dazu ist es notwendig, dass der Server die Adresse des Kunden genannt bekommt, unter der der Kunde (PC des Kunden) im Internet erreichbar ist. Auf der Kundendatenbank des Content-Providers sind neben dem Nutzernamen und Passwort des Kunden auch die Daten des Internet- Providers (in unserem Fall T-Online) gespeichert, bei dem der Kunde registriert ist.

Der Server des Content-Providers sendet eine Anfrage an Domain Name Service (DNS) des Internet-Providers mit der Anfrage nach der IP-Adresse des Kunden X. Kann DNS des Netzanbieters die Adresse auflösen (das heißt der Kunde ist bereits online), so ist der Kunden-PC aus dem Internet erreichbar. Bekommt der Content-Provider eine negative Antwort (Kunde ist offline), wird eine weitere Anfrage nach "Anforderung einer Verbindung" gestellt. Auf diese Anfrage hin wird die RADIUS-Datenbank des Netzanbieters nach der MAC-Adresse (Ethernet-Adresse) des Client-PC des Kunden abgefragt. Die MAC-Adresse ist weltweit eindeutig, d. h. jede Ethernet-Karte hat eine exklusive Adresse, die bei der Herstellung vergeben wird.

Der Internet-Provider sendet nun einen Ethernet-Rahmen mit der Zieladresse des Client-PC an den Kunden. In der Payload (den Nutzdaten) befindet sich die Aufforderung an den PPPoE-Client, eine Verbindung zum Internet-Provider aufzubauen. Der PC des Kunden durchsucht die ankommenden Ethernet-Rahmen nach Nutzdaten. Beinhalten die Nutzdaten die Aufforderung zum Starten einer PPPoE-Verbindung, so wird der PPPoE-Client gestartet und es wird eine Verbindung zum Internet-Provider aufgebaut. Der nun folgende Verbindungsaufbau ist identisch mit dem bekannten Zugang zum Provider T-Online.

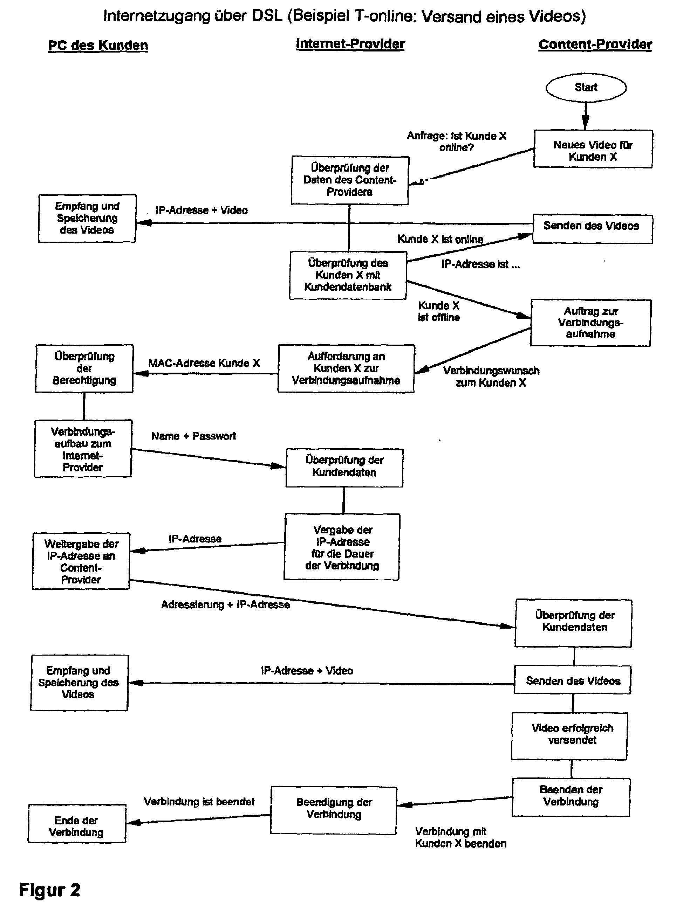

Wurde dem Kunden die Internet-Protokoll-Adresse vergeben, kann die Anfrage des Content-Anbieters beantwortet werden. Der PC des Kunden kann nun vom Internet-Anbieter aus erreicht werden. Das Ablauf-Diagramm (siehe Fig. 2) beschreibt die Vorgehensweise.

Folgende Änderungen in der DSL-Plattform sind erforderlich:
1. Aufbau einer Kunden-DNS-Datenbank, in der eine Adressautlösung mit Kundennamen nach folgendem Beispiel stattfindet.
   IP-Adresse: 192.168.100.3
   Name: userx.t-online.de

   Diese Datenbank kann lokal bei den Internet-Providern gehalten werden und muss nicht in die öffentlichen DNS-Netze gespeist werden.
2. MAC-Adressen der Kunden-PC oder PC-ähnlichen Geräte müssen zusätzlich zu den bisherigen RADIUS-Daten abgespeichert werden. Dies kann auch in einer separaten Datenbank erfolgen.
3. Eine Sicherheitskomponente via Zertifkat ist erforderlich, damit der PC des Kunden den Server, der die Anfrage zum Verbindungsaufbau stellt, auch authentifizieren kann.
4. Der PPPoE-Client ist um folgende Funktionen zu erweitern:
   - Auswerten aller eintreffenden Ethernet-Rahmen hinsichtlich einer Nachricht für einen auszulösenden Verbindungsaufbau.
   - Überprüfen der mitgelieferten Sicherheitskennung (Zertifikation).

### Technische Lösung mit Outband-Signalisierung

Die Signalisierung zur Auslösung des Verbindungsaufbaus kann auch über den Daten-Kanal (D-Kanal) eines ISDN-Anschlusses erfolgen. Dafür ist erforderlich, dass der Kunden-PC den D-Kanal auf ein Steuersignal überprüft und dann die DSL-Verbindung aufbaut. Die Überwachung der D-Kanal-Signalisierung erfolgt durch eine zusätzliche ISDN-Karte. Der Verbindungsaufbau wird in folgenden Verfahrensschritten initiiert.

Ein Rechner mit einer Internet-Adresse (Server eines Content-Providers) möchte einem Kunden Daten zukommen lassen (Real Push). Der Anbieter hat neben den allgemeinen Kundendaten auch eine spezielle Telefonnummer (MSN) in seiner Kundendatenbank. Diese MSN (Multiple Subscriber Number) wird nur für diesen Service benutzt.
Der Server des Content-Providers wählt mit dem Leistungsmerkmal UUS1 (User to User-Signalisierung) die spezielle MSN des Kunden an und übermittelt eine Anforderung zum Verbindungsaufbau. Der PC des Kunden überwacht ständig die ISDN-Leitung auf ankommende UUS1-Signale. Trifft ein solches Signal ein, wird nach Überprüfung der Authentizität des Servers eine DSL-Verbindung aufgebaut. Neben der Aufforderung zum Verbindungsaufbau wird die Internet-Adresse des Content-Providers mit übertragen.
Die Verbindung zum Internet-Provider und zur übermittelten Internet-Adresse wird hergestellt. Zusätzlich werden Benutzerdaten mit übermittelt und vom Internet-Provider überprüft. Ist die Verbindung in das Internet hergestellt, sendet der PC des Kunden dem Content-Provider die IP-Adresse und die Übertragung der Informationen kann beginnen.

## Patentansprüche

1. Verfahren für den Verbindungsaufbau in Telekommunikationsnetzen mit DSL-Technologien, bei denen die technische Konfiguration einen Verbindungsaufbau ausschließlich von Seiten des Kunden hin zum Telekommunikationsnetz zulässt und der Kunde nur während einer aktiven Verbindung über die für diese Verbindung vom Internet-Provider zugewiesene IP-Adresse aus dem Internet erreichbar ist und die jeweils gültige IP-Adresse nur dem Kunden und seinem Internet-Provider bekannt ist,
**dadurch gekennzeichnet,**
**dass** eine Internet-Verbindung zu einem Kunden mit DSL-Anschluss auch aus dem Internet hin zum Kunden von einem Content-Provider initiiert werden kann,
**dass** der Content-Provider dafür die Anfrage nach der IP-Adresse eines bestimmten Kunden an den Internet-Provider des Kunden richtet,
**dass** der Internet-Provider nach Prüfung der Berechtigung des Content-Providers die gültige IP-Adresse des Kunden an den Content-Provider sendet, soweit der Kunde "online" ist,
**dass** der Internet-Provider, soweit der Kunde nicht "online" ist, den Kunden über die Ethernet-Adresse zur Verbindungsaufnahme auffordert,
**dass** der PC des Kunden nach Eintreffen der Aufforderung den Verbindungsaufbau zum Internet-Provider automatisch ausführt, und
**dass** nach erfolgreicher Verbindungsaufnahme der Kunde die für diese Verbindung vom Internet-Provider zugewiesene IP-Adresse an den Content-Provider sendet.

2. Verfahren nach Anspruch 1, **dadurch gekennzeichnet, dass** die Ethernet-Adressen der Kunden beim Internet-Provider in einer Datenbank gespeichert sind, dass die vom Internet-Provider gesendete Ethernet-Adresse durch den Kunden-PC ständig nach Nutzdaten ausgewertet wird, und dass die Nutzdaten die Aufforderung für den Verbindungsaufbau enthalten.

3. Verfahren nach Anspruch 1 und 2, **dadurch gekennzeichnet, dass** der PC des DSL-Kunden sich ständig in eingeschaltetem Zustand befindet, damit die vom Internet-Provider gesendete Ethernet-Adresse ständig empfangen und ausgewertet werden kann.

4. Verfahren für den Verbindungsaufbau in Telekommunikationsnetzen mit DSL-Technologien, bei denen die technische Konfiguration einen Verbindungsaufbau ausschließlich von Seiten des Kunden hin zum Telekommunikationsnetz zulässt und der Kunde nur während einer aktiven Verbindung über die für diese Verbindung vom Internet-Provider zugewiesene IP-Adresse aus dem Internet erreichbar ist und die jeweils gültige IP-Adresse nur dem Kunden und seinem Internet-Provider bekannt ist,
**dadurch gekennzeichnet,**
**dass** eine Internet-Verbindung zu einem Kunden mit DSL-Anschluss auch aus dem Internet hin zum Kunden von einem Content-Provider initiiert werden kann,
**dass** dafür der Content-Provider den DSL-Kunden über dessen ISDN-Anschluss und unter Verwendung einer ausschließlich für diesen Service vereinbarten Rufnummer anwählt,
**dass** die Aufforderung zum Verbindungsaufbau an den Kunden unter Nutzung des ISDN-Leistungsmerkmals Teilnehmer-zu-Teilnehmer-Zeichengabe übertragen wird,
**dass** mit der Aufforderung zur Verbindungsaufnahme auch die Internet-Adresse des Content-Providers zum Kunden übertragen wird,
**dass** der PC des Kunden den ISDN-Kanal ständig überwacht und bei Vorlage der Aufforderung zum Verbindungsaufbau die DSL-Verbindung zum Internet-Provider automatisch aufbaut, und
**dass** nach erfolgreichem Verbindungsaufbau die für diese Verbindung zugewiesenen IP-Adresse vom Kunden an den Content-Provider gesendet wird.

## Claims

1. Method for connection setup in telecommunications networks with DSL technologies, in which the technical configuration permits setup of a connection exclusively on the part of the customer to the telecommunications network, and the customer can only be reached from the Internet during an active connection at the IP address assigned for this connection by the Internet provider, and the applicable valid IP address is known only to the customer and his Internet provider,
**characterized in that**
an Internet connection to a customer with DSL connectivity can also be initiated from the Internet to the customer by a content provider,
**in that** for this purpose the content provider directs the inquiry for the IP address of a particular customer to the customer's Internet provider,
**in that** the Internet provider, after verifying the content provider's authorization, sends the customer's valid IP address to the content provider if the customer is "online,"
**in that**, if the customer is not "online," the Internet provider requests via the Ethernet address that the customer accept a connection,
**in that** the PC of the customer, upon receiving the request, automatically performs setup of the connection to the Internet provider, and
**in that**, after successful connection acceptance, the customer sends the IP address assigned by the Internet provider for this connection to the content provider.

2. Method according to claim 1, **characterized in that** the Ethernet addresses of the customers are stored in a database at the Internet provider,
**in that** the Ethernet address sent by the Internet provider is continuously evaluated by the customer PC for user data, and **in that** the user data contain the request for the connection setup.

3. Method according to claims 1 and 2, **characterized in that** the PC of the DSL customer is always in the switched-on state so that the Ethernet address sent by the Internet provider can always be received and evaluated.

4. Method for connection setup in telecommunications networks with DSL technologies, in which the technical configuration permits setup of a connection exclusively on the part of the customer to the telecommunications network, and the customer can only be reached from the Internet during an active connection at the IP address assigned for this connection by the Internet provider, and the applicable valid IP address is known only to the customer and his Internet provider,
**characterized in that**
an Internet connection to a customer with DSL connectivity can also be initiated from the Internet to the customer by a content provider,
**in that** for this purpose the content provider dials the DSL customer through his ISDN connection and using a telephone number reserved exclusively for this service,
**in that** the request for connection setup is transmitted to the customer using the ISDN feature of subscriber-to-subscriber signaling,
**in that** the Internet address of the content provider is also transmitted to the customer along with the request for connection acceptance,
**in that** the PC of the customer continuously monitors the ISDN channel and, when a request for connection setup is present, automatically establishes the DSL connection to the Internet provider, and
**in that**, after successful connection setup, the IP address assigned for this connection is sent by the customer to the content provider.

## Revendications

1. Procédé d'établissement de liaison dans des réseaux de télécommunications à l'aide de technologies DSL, dans lequel la configuration technique ne permet l'établissement d'une liaison que par le client vers le réseau de télécommunications, le client n'étant joignable que pendant une liaison active à partir de l'Internet sur l'adresse IP attribuée pour cette liaison par le fournisseur d'accès Internet et l'adresse IP alors valable n'étant connue que du client et de son fournisseur d'accès Internet,
**caractérisé en ce que**
une liaison Internet vers un client possédant un accès DSL peut aussi être activée par un fournisseur de contenus à partir de l'Internet vers le client,
le fournisseur de contenus demande au fournisseur d'accès Internet l'adresse IP d'un client déterminé,
dans la mesure où le client est en ligne, le fournisseur d'accès Internet envoie l'adresse IP valable du client au fournisseur de contenus après avoir vérifié que celui-ci est autorisé à la recevoir,
dans la mesure où le client n'est pas en ligne, le fournisseur d'accès Internet invite le client par l'adresse Ethernet à entrer en liaison,
sur réception de l'invitation, le PC du client établit automatiquement la liaison avec le fournisseur d'accès Internet,
après établissement de la liaison, le client envoie au fournisseur de contenus l'adresse IP attribuée pour cette liaison par le fournisseur d'accès Internet.

2. Procédé selon la recommandation 1, **caractérisé en ce que** les adresses Ethernet du client sont mémorisées dans une banque de données auprès du fournisseur d'accès Internet, **en ce que** les adresses Ethernet envoyées par le fournisseur d'accès Internet font l'objet de la part du PC du client de recherches permanentes de données utiles et **en ce que** les données utiles contiennent l'invitation à établir la liaison.

3. Procédé selon les recommandations 1 et 2, **caractérisé en ce que** le PC du client DSL est branché en permanence, afin que l'adresse Ethernet envoyée par le fournisseur d'accès Internet puisse à tout moment être reçue et analysée.

4. Procédé d'établissement de liaison dans des réseaux de télécommunications à l'aide de technologies DSL, dans lequel la configuration technique ne permet l'établissement d'une liaison que par le client vers le réseau de télécommunications, le client n'étant joignable que pendant une liaison active à partir de l'Internet sur l'adresse IP attribuée pour cette liaison par le fournisseur d'accès Internet et l'adresse IP alors valable n'étant connue que du client et de son fournisseur d'accès Internet,
**caractérisé en ce que**
une liaison Internet vers un client possédant un accès DSL peut aussi être activée par un fournisseur de contenus à partir de l'Internet vers le client,
à cet effet, le fournisseur de contenus appelle le client DSL sur son accès RNIS en utilisant un numéro d'appel convenu exclusivement pour ce service,
l'invitation à établir la liaison est transmise au client par le biais de la fonctionnalité RNIS « signalisation d'abonné à abonné »,
parallèlement à l'invitation à établir la liaison, l'adresse Internet du fournisseur de contenus est également transmise au client,
le PC du client surveille en permanence le canal RNIS et établit automatiquement la liaison DSL avec le fournisseur d'accès Internet dès qu'arrive l'invitation à établir la liaison et
après établissement de la liaison, l'adresse IP attribuée pour cette liaison est envoyée par le client au fournisseur de contenus.
